# EUROPÄISCHE PATENTSCHRIFT

(11) **EP 4 419 059 B1**
(45) Veröffentlichungstag und Bekanntmachung des Hinweises auf die Patenterteilung: **03.09.2025**
(21) Anmeldenummer: 22800632.6
(22) Anmeldetag: 05.10.2022
(51) Int. Cl.: A61G 5/06, B62D 55/075, A61G 5/10

(54) **FAHRZEUG ZUM BEFAHREN EINER TREPPE ODER EINER RAMPE**
VEHICLE FOR DRIVING ON STAIRS OR A RAMP
VÉHICULE APTE À FRANCHIR UN ESCALIER OU UNE RAMPE

(30) Priorität: 19.10.2021 DE 102021127085
(43) Veröffentlichungstag der Anmeldung: 28.08.2024
(73) Patentinhaber: Scewo AG, 8406 Winterthur (CH)
(72) Erfinder: DREHER, Philip, 8406 Winterthur (CH)
(74) Vertreter: Dr. Gassner & Partner mbB
(86) Internationale Anmeldenummer: PCT/EP2022/077673
(87) Internationale Veröffentlichungsnummer: WO 2023/066664

(56) Entgegenhaltungen:
- CN-A- 104 970 931
- CN-A- 109 700 607
- CN-A- 111 297 582
- CN-A- 113 133 876

## Beschreibung

Die Erfindung betrifft ein Fahrzeug zum Befahren einer Treppe oder einer Rampe, wobei das Fahrzeug Räder, ein Raupenfahrwerk, eine Aufnahme zum Tragen und Transportieren einer Last und ein Stützrad aufweist und wahlweise in einer der folgenden Betriebsarten betreibbar ist: eine erste Betriebsart, die für einen im Wesentlichen ebenen Untergrund vorgesehen ist, in der das eine oder die mehreren Räder angetrieben werden, eine zweite Betriebsart, die zum Befahren einer Treppe oder einer Rampe vorgesehen ist, in der das Raupenfahrwerk angetrieben wird, eine dritte Betriebsart, in der die Höhe der Aufnahme zum Tragen und Transportieren einer Last verstellbar ist und das Fahrzeug auf dem Raupenfahrwerk und dem Stützrad abgestützt ist.

In dem Dokument CN 111 297 582 A wird ein gattungsgemäßes Fahrzeug vorgeschlagen.

Ein derartiges Fahrzeug ist beispielsweise auch aus der von der Anmelderin stammenden EP 3 598 959 A1 bekannt. Das Fahrzeug kann insbesondere als Rollstuhl ausgebildet sein, der für einen Benutzer besonders komfortabel ist. In der oben erwähnten dritten Betriebsart kann die als Sitz ausgebildete Aufnahme nach vorne verlagert werden, sodass der Rollstuhl unter eine Tischplatte gefahren werden kann.

Der in dieser Anmeldung verwendete Begriff "Stützrad" ist breit zu verstehen und kann ein Hartgummirad, einen Luftreifen und grundsätzlich auch eine Kette eines Raupenfahrwerks umfassen.

Um zwischen den verschiedenen Betriebsarten zu wechseln, muss das Raupenfahrwerk und das Stützrad oder die Stützräder in bestimmte Positionen bewegt werden. Dazu weist das erfindungsgemäße Fahrzeug wenigstens einen ersten Linearmotor zum Verstellen des Raupenfahrwerks und einen zweiten Linearmotor zum Verstellen des oder der Stützräder auf. Sofern das Fahrzeug zwei Stützräder aufweist, kann auch jedem Stützrad ein Linearmotor zugeordnet sein.

Es hat sich allerdings herausgestellt, dass auf die Linearmotoren unter bestimmten Bedingungen hohe Lasten wirken. Wenn sich das erfindungsgemäße Fahrzeug im Höhenverstellmodus an der obersten Position befindet, ist die vom Linearmotor zum Verstellen des Raupenfahrwerks aufzuwendende Kraft maximal. Andererseits muss der Linearmotor des Raupenfahrwerks auch dann, wenn sich das Fahrzeug im Höhenverstellmodus an der vordersten Position befindet, eine besonders hohe Kraft aufwenden. Der Linearmotor des Raupenfahrwerks wird fast ausschließlich auf Druck belastet, während der Linearmotor zum Verstellen des Stützrads fast ausschließlich auf Zug belastet wird.

Der Erfindung liegt daher die Aufgabe zugrunde, ein Fahrzeug zum Befahren einer Treppe oder einer Rampe anzugeben, bei dem sowohl der Linearmotor des Raupenfahrwerks als auch der Linearmotor des Stützrads entlastet ist.

Zur Lösung dieser Aufgabe ist bei einem Fahrzeug der eingangs genannten Art erfindungsgemäß vorgesehen, dass das Fahrzeug wenigstens einen ersten Linearmotor zum Verstellen des Raupenfahrwerks, einen zweiten Linearmotor zum Verstellen des Stützrads, einen Hubmechanismus, mit einem Grundkörper, an dem der erste Linearmotor und der zweite Linearmotor angeordnet sind, und eine an dem Hubmechanismus angeordnete Feder zum Entlasten des ersten und/oder des zweiten Linearmotors aufweist.

Die Erfindung beruht auf der Erkenntnis, dass der erste und/oder der zweite Linearmotor durch die an dem Hubmechanismus angeordnete Feder entlastet werden kann bzw. können. Auf diese Weise kann der Betriebsbereich der Linearmotoren in einen günstigen Bereich verschoben worden, sodass diese nicht einseitig belastet werden.

Im Rahmen der Erfindung wird es bevorzugt, dass der erste Linearmotor zum Verstellen des Raupenfahrwerks durch eine von der Feder erzeugte Zugkraft entlastet wird, die einer auf den ersten Linearmotor einwirkenden Druckkraft entgegenwirkt. Die Druckkraft entsteht hauptsächlich durch das Eigengewicht des Fahrzeugs sowie das Gewicht einer Position oder einer Last, die sich auf der Aufnahme des Fahrzeugs befindet. Die Feder dient somit zur Kompensation der Druckkraft und entlastet den ersten Linearmotor zum Verstellen des Raupenfahrwerks.

Eine bevorzugte Variante der Erfindung sieht vor, dass die Feder als Druckfeder ausgebildet und so angeordnet ist, dass der zweite Linearmotor zum Verstellen des Stützrads durch eine von der Druckfeder erzeugte Druckkraft entlastet wird, die einer auf den zweiten Linearmotor einwirkenden Zugkraft entgegenwirkt.

Erfindungsgemäß weist der Hubmechanismus des erfindungsgemäßen Fahrzeugs einen Grundkörper auf, an dem der erste Linearmotor und die Feder vorzugsweise gelenkig angeordnet sind. Ein Ende der Feder ist somit an dem Grundkörper befestigt, das andere Ende der Feder kann an einer Strebe befestigt sein, an der das Stützrad oder die Stützräder angebracht sind.

Eine Weiterbildung der Erfindung sieht vor, dass das Fahrzeug zwei parallel angeordnete Federn oder Druckfedern aufweist. Bei dieser Ausgestaltung weist das Fahrzeug zwei Stützräder auf, an denen jeweils ein Ende einer Feder befestigt ist, wobei das andere Ende der Feder an der Halterung angebracht ist. Alternativ kann auch lediglich ein einziges Stützrad vorhanden sein.

Vorzugsweise kann die Feder als Gasdruckfeder ausgebildet sein, die eine Drucckraft erzeugt, die zur Entlastung des ersten Linearmotors zum Verstellen des Raupenfahrwerks und/oder des zweiten Linearmotors zum Verstellen des Stützrads oder der Stützräder dient. Darüber hinaus weist die Gasdruckfeder den Vorteil auf, dass sie Schwingungen dämpft und eine flache Federkennlinie besitzt, sodass auch im ausgefahrenen Zustand eine große Druckkraft erzeugt werden kann. Die Gasdruckfeder kann so angebracht sein, dass bei angetriebenem Raupenfahrwerk, d. h. beim Befahren einer Treppe oder einer Rampe, eine Vorspannung erzeugt wird, die Klappergeräusche verhindert.

Das erfindungsgemäße Fahrzeug eignet sich insbesondere dazu, in der ersten Betriebsart selbstbalancierend betrieben zu werden, indem parallele Räder einer Achse angetrieben werden.

Das erfindungsgemäße Fahrzeug kann als Rollstuhl mit einer als Sitz ausgebildeten Aufnahme ausgebildet sein. **In** der dritten Betriebsart kann die Höhe des Sitzes nach Bedarf vertikal und in Längsrichtung eingestellt werden, beispielsweise wenn die das Fahrzeug benutzende Person sich an einem Tisch befindet.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: eine perspektivische Ansicht eines erfindungsgemäßen Fahrzeugs, das als Rollstuhl ausgebildet ist,
- Fig. 2: eine schematische Seitenansicht des als Rollstuhl ausgebildeten erfindungsgemäßen Fahrzeugs in der ersten Betriebsart (Fahrmodus),
- Fig. 3: den in Fig. 2 gezeigten Rollstuhl in der zweiten Betriebsart, beim Befahren einer Treppe,
- Fig. 4: den in Fig. 2 gezeigten Rollstuhl in der dritten Betriebsart (Höhenverstellmodus), in oberer Position,
- Fig. 5: den in Fig. 2 gezeigten Rollstuhl in der dritten Betriebsart (Höhenverstellmodus), in unterer Position,
- Fig. 6: den in Fig. 2 gezeigten Rollstuhl im geparkten Zustand, und
- Fig. 7: die an dem Grundkörper des Rollstuhls angebrachten Linearmotoren.

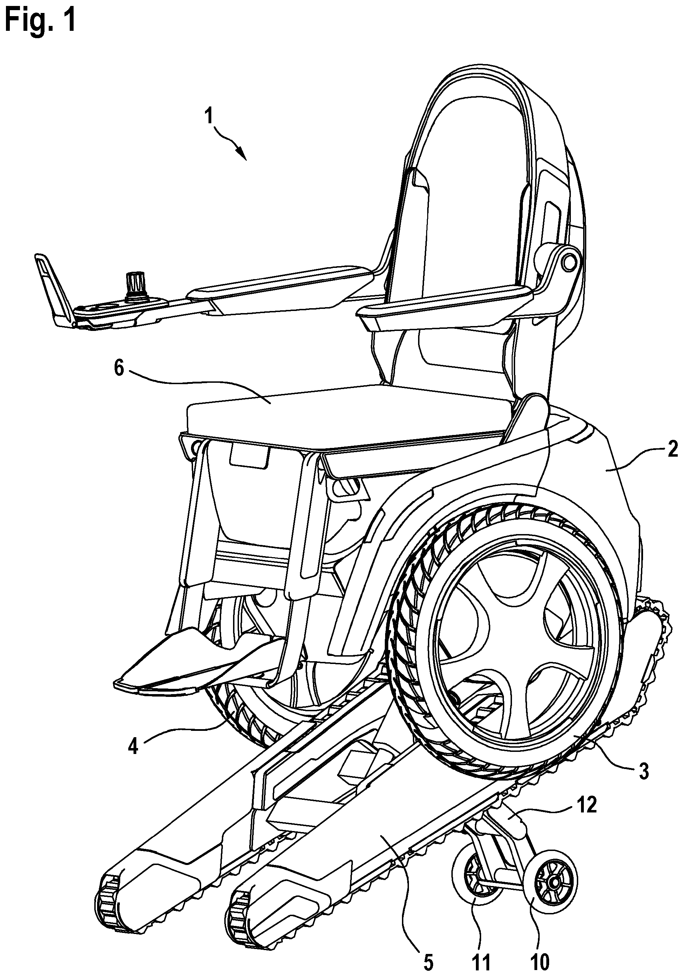

Der in Fig. 1 gezeigte Rollstuhl 1 umfasst einen Grundkörper 2, der an beiden Seiten mit Rädern 3, 4 versehen ist. Der Rollstuhl 1 weist einen nicht näher dargestellten elektrischen Antrieb auf, durch den die Räder 3, 4 antreibbar sind. Die Räder 3, 4 dienen zum Fahren auf einem im Wesentlichen ebenen Untergrund in einer ersten Betriebsart. Zusätzlich weist der Rollstuhl 1 ein Raupenfahrwerk 5 auf, das ein als Riemen oder Kette ausgebildetes Umschlingungsmittel umfasst. Mittels des Raupenfahrwerks 5 ist der Rollstuhl 1 in der Lage, eine Treppe oder eine Rampe zu befahren. **In** dieser zweiten Betriebsart befinden sich die Räder 3, 4 in einer erhöhten Position. In der ersten Betriebsart, wenn der Rollstuhl 1 hingegen mittels der Räder 3, 4 bewegt wird, befindet sich das Raupenfahrwerk 5 in einer erhöhten Position. Mittels eines Controllers (nicht gezeigt) kann der Antrieb so angesteuert werden, dass der den Benutzer tragende Rollstuhl lediglich von den Rädern 3, 4 getragen und somit balanciert wird. Der Rollstuhl 1 ist als selbstbalancierendes Fahrzeug ausgebildet.

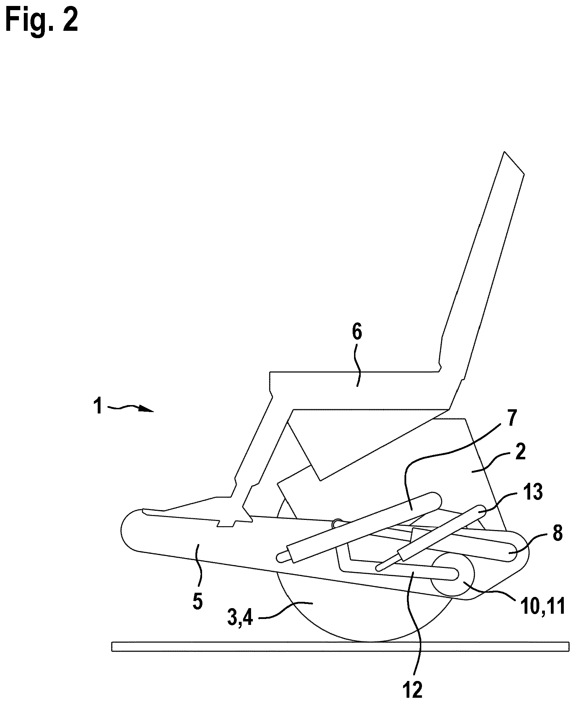

Fig. 2 ist eine schematische Seitenansicht des als Rollstuhl 1 ausgebildeten Fahrzeugs in der ersten Betriebsart (Fahrmodus). Der Rollstuhl umfasst eine als Sitz 6 ausgebildete Aufnahme. In dieser ersten Betriebsart ist der Rollstuhl 1 selbstbalancierend, d. h. lediglich die beiden Räder 3, 4 berühren den Boden. Das Balancieren erfolgt durch den Controller, der mit einer inertialen Messeinheit (IMU) verbunden ist und die Räder 3, 4 anhand von Sensordaten regelt.

Der Rollstuhl 1 umfasst einen ersten Linearmotor 7, der zur Verstellung des Raupenfahrwerks dient. Ein Ende des ersten Linearmotors 7 ist an dem Raupenfahrwerk 5 befestigt, das andere Ende ist an dem Grundkörper 2 angebracht. Daneben umfasst der Rollstuhl 1 einen zweiten Linearmotor 8 zur Verstellung der Stützräder 10, 11, die an derselben Achse befestigt sind. In der Seitenansicht von Fig. 2 sind der zweite Linearmotor 8 und das linke Stützrad 10 sichtbar. Der zweite Linearmotor 8 ist mit einem Ende an dem Grundkörper 2 und mit seinem anderen Ende an einer Strebe 12 befestigt, an der sich das linke Stützrad 10 befindet.

Auf den ersten Linearmotor 7 zur Verstellung des Raupenfahrwerks wirkt eine Druckkraft, auf den zweiten Linearmotor 8 zur Verstellung des Stützrads 10 wirkt eine Zugkraft. Zur Entlastung der Linearmotoren 7, 8 dient eine als Druckfeder 13 ausgebildete Feder, die einerseits an dem Grundkörper 2 und andererseits an der Strebe 12 befestigt ist. Die Druckfeder 13 erzeugt eine Druckkraft, die der durch das Gewicht des Rollstuhl 1 erzeugten Kraft, die ansonsten von den Linearmotoren 7, 8 aufgenommen werden muss, entgegenwirkt und diese somit entlastet. Auf diese Weise kann der Arbeitsbereich der Linearmotoren 7, 8 besser ausgenutzt werden.

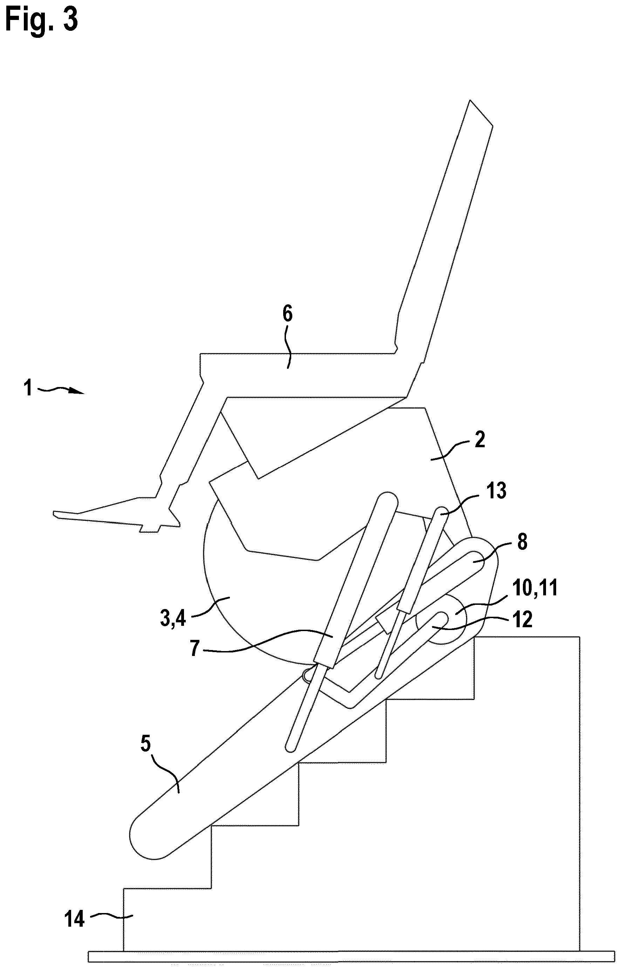

Fig. 3 zeigt den Rollstuhl 1 beim Befahren einer Treppe 14. Die Räder 3, 4 befinden sich in einer gegenüber dem Raupenfahrwerk 5 erhöhten Position, die Stützräder 10, 11 sind näherungsweise in Längsrichtung zum Raupenfahrwerk 5 ausgerichtet. Dementsprechend berührt ausschließlich das Raupenfahrwerk 5 die Stufen der Treppe 14.

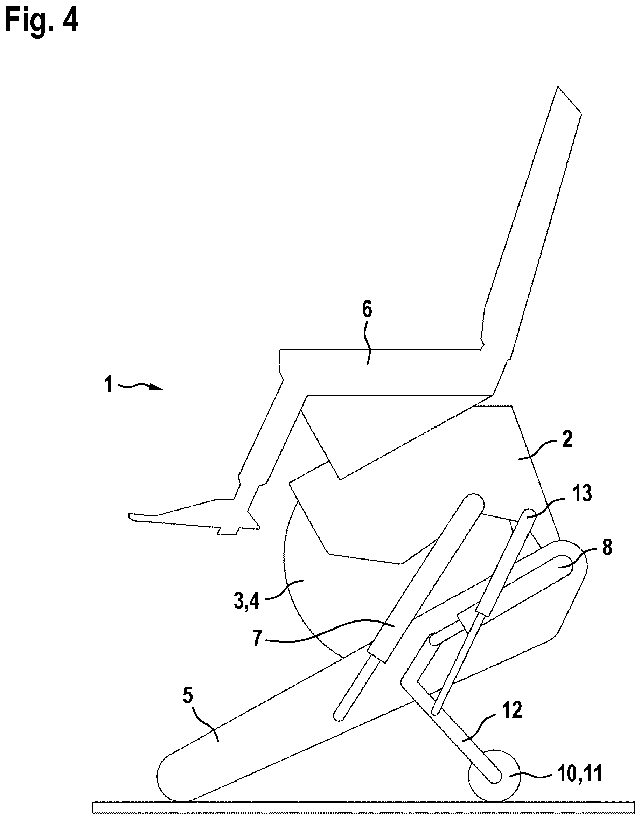

Fig. 4 zeigt den Rollstuhl 1 in der dritten Betriebsart, im Höhenverstellmodus, in der oberen Position. Der Rollstuhl 1 steht mit den beiden Stützrädern 10, 11 und dem vorderen Ende des Raupenfahrwerks 5 auf einem Untergrund. Die Räder 3, 4 befinden sich in einer erhöhten Position und sind vom Untergrund beabstandet. Die auf die Linearmotoren 7, 8 wirkenden Kräfte werden durch die Druckfeder 13 reduziert und zumindest teilweise kompensiert.

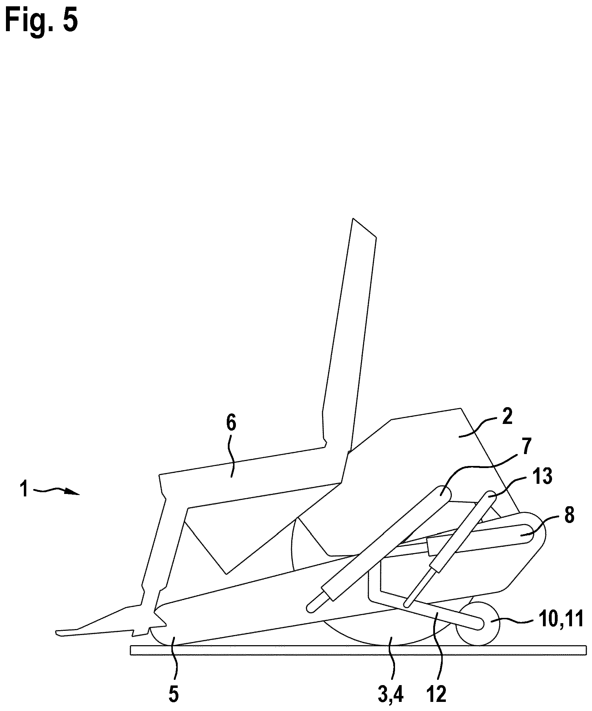

Fig. 5 ist eine ähnliche Darstellung wie Fig. 4 und zeigt den Rollstuhl 1 in der dritten Betriebsart, im Höhenverstellmodus, in der unteren Position. Der Schwerpunkt des Rollstuhls 1 ist dabei nach vorne verschoben, so dass eine maximale Kraft auf den ersten Linearmotor 7 des Raupenfahrwerks 5 wirkt. Allerdings wird der erste Linearmotor 7 durch die Gasdruckfeder 13 erheblich entlastet. Man erkennt, dass ausgehend von dem in Fig. 4 gezeigten Zustand die Räder 3, 4 so weit nach unten bewegt worden sind, dass sie sich wie die Stützräder 10, 11 und das vordere Ende des Raupenfahrwerks 5 auf dem Untergrund befinden. Gleichzeitig ist der Sitz 6 in Längsrichtung nach vorne bewegt worden. Diese Position wird vorzugsweise gewählt, wenn der Benutzer des Rollstuhls 1 an einem Tisch sitzt.

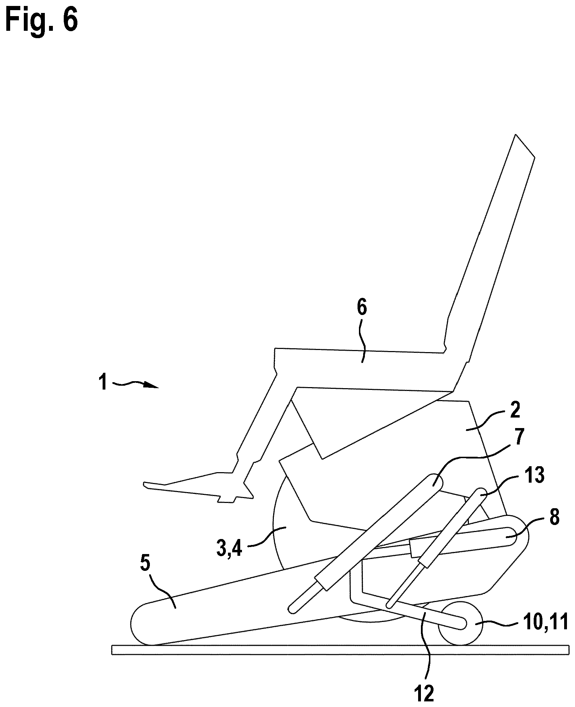

Fig. 6 zeigt den Rollstuhl 1 in einem Parkmodus, d. h. im nicht angetriebenen Zustand. In Übereinstimmung mit der unteren Position des Höhenverstellmodus steht der Rollstuhl 1 auf den Stützrädern 10, 11 und dem vorderen Ende des Raupenfahrwerks 1 auf. Die Räder 3, 4 befinden sich allerdings in einer demgegenüber erhöhten Position.

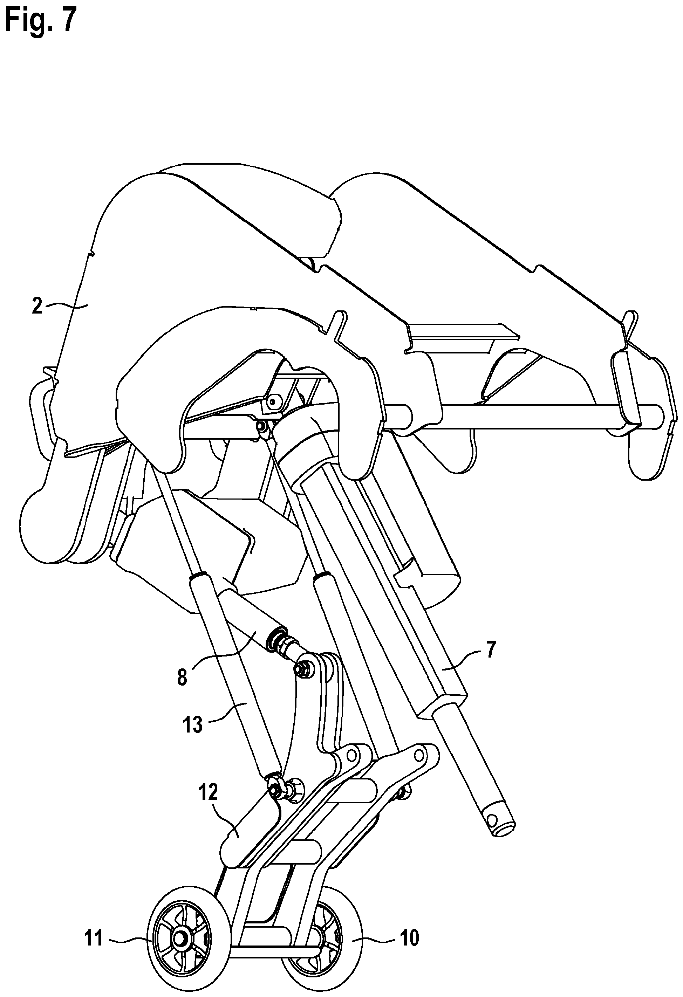

Fig. 7 zeigt schließlich die Anbindung des ersten Linearmotors 7, an den Grundkörper 2. In Fig. 7 sind einige Komponenten der besseren Übersichtlichkeit wegen weggelassen wurden. Man erkennt dort, dass zwei parallel angeordnete Druckfedern 13 vorhanden sind, die mit einem Ende an dem Grundkörper 2 und mit ihrem anderen Ende an der Strebe 12 der Stützräder 10, 11 befestigt sind. An dieser Strebe greift auch der Linearmotor 9 an, der mit seinem anderen Ende ebenfalls am Grundkörper 2 des Rollstuhls 1 angebracht ist. Der erste Linearmotor 7 ist mit seinem äußeren, in Fig. 7 unteren Ende an dem (nicht gezeigten) Raupenfahrwerk befestigt. Das entgegengesetzte, in Fig. 7 obere Ende ist an dem Grundkörper 2 angebracht.

In sämtlichen beschriebenen Positionen dient die Druckfeder 13 zur Erzeugung einer Druckkraft, die den auf die Linearmotoren 7, 8 wirkenden Kräften entgegenwirkt und diese dadurch reduziert und zumindest teilweise kompensiert, sodass die Linearmotoren 7, 8 in einem optimalen Betriebsbereich betrieben werden können.

### Bezugszeichenliste

- 1: Rollstuhl
- 2: Grundkörper
- 3: Rad
- 4: Rad
- 5: Raupenfahrwerk
- 6: Sitz
- 7: erster Linearmotor
- 8: zweiter Linearmotor
- 10: Stützrad
- 11: Stützrad
- 12: Strebe
- 13: Druckfeder
- 14: Treppe

## Patentansprüche

1. Fahrzeug (1) zum Befahren einer Treppe (14) oder einer Rampe, wobei das Fahrzeug Räder (3, 4), ein Raupenfahrwerk (5), eine Aufnahme (6) zum Tragen und Transportieren einer Last und ein Stützrad (10, 11) aufweist und wahlweise in einer der folgenden Betriebsarten betreibbar ist:
- eine erste Betriebsart, die für einen im Wesentlichen ebenen Untergrund vorgesehen ist, in der das eine oder die mehreren Räder (3, 4) angetrieben werden,
- eine zweite Betriebsart, die zum Befahren einer Treppe (14) oder einer Rampe vorgesehen ist, in der das Raupenfahrwerk (5) angetrieben wird,
- eine dritte Betriebsart, in der die Höhe der Aufnahme (6) zum Tragen und Transportieren einer Last verstellbar ist und das Fahrzeug (1) auf dem Raupenfahrwerk (5)
und dem Stützrad (10, 11) abgestützt ist,
wobei das Fahrzeug (1) aufweist:
- wenigstens einen ersten Linearmotor (7) zum Verstellen des Raupenfahrwerks (5),
- einen zweiten Linearmotor (8) zum Verstellen des Stützrads (10, 11),
- einen Hubmechanismus, mit einem Grundkörper (2), an dem der erste Linearmotor (7) und der zweite Linearmotor (8) angeordnet sind, **dadurch gekennzeichnet, dass** an dem Hubmechanismus eine Feder (13) zum Entlasten des ersten Linearmotors (7) und/oder des zweiten Linearmotors (8) angeordnet ist.

2. Fahrzeug nach Anspruch 1, wobei die Feder so angeordnet ist, dass der erste Linearmotor (7) zum Verstellen des Raupenfahrwerks (5) durch eine von der Feder erzeugte Zugkraft entlastet wird, die einer auf den ersten Linearmotor (7) einwirkenden Druckkraft entgegenwirkt.

3. Fahrzeug nach Anspruch 1 oder 2, wobei die Feder als Druckfeder (13) ausgebildet und so angeordnet ist, dass der zweite Linearmotor (8) zum Verstellen des Stützrads (10, 11) durch eine von der Druckfeder (13) erzeugte Druckkraft entlastet wird, die einer auf den zweiten Linearmotor (8) einwirkenden Zugkraft entgegenwirkt.

4. Fahrzeug nach einem der vorangehenden Ansprüche, wobei zwei parallel angeordnete Federn oder Druckfedern (13) vorhanden sind.

5. Fahrzeug nach einem der vorangehenden Ansprüche, wobei die Feder als Gasdruckfeder ausgebildet ist.

6. Fahrzeug nach einem der vorangehenden Ansprüche, das dazu ausgebildet ist, in der ersten Betriebsart selbstbalancierend betrieben zu werden.

7. Fahrzeug nach einem der vorangehenden Ansprüche, das als Rollstuhl (1) mit einer als Sitz (6) ausgebildeten Aufnahme ausgebildet ist.

## Claims

1. Vehicle (1) for driving on a staircase (14) or a ramp, the vehicle comprising wheels (3, 4), a crawler track (5), a support (6) for carrying and transporting a load and a support wheel (10, 11) and being selectively operable in one of the following modes of operation:
- a first operating mode, which is provided for a substantially level surface, in which the one or more wheels (3, 4) are driven,
- a second operating mode, which is intended for driving on a staircase (14) or a ramp, in which the crawler track (5) is driven,
- a third operating mode in which the height of the support (6) for carrying and transporting a load is adjustable and the vehicle (1) is supported on the crawler track (5) and the support wheel (10, 11),
wherein the vehicle (1) comprises
- at least one first linear motor (7) for adjusting the crawler track (5),
- a second linear motor (8) for adjusting the support wheel (10, 11),
- a lifting mechanism with a base body (2) on which the first linear motor (7) and the second linear motor (8) are arranged, **characterized in that** a spring (13) for relieving the first linear motor (7) and/or the second linear motor (8) is arranged on the lifting mechanism.

2. Vehicle according to claim 1, wherein the spring is arranged such that the first linear motor (7) for adjusting the crawler track (5) is relieved by a tensile force generated by the spring, which counteracts a compressive force acting on the first linear motor (7).

3. Vehicle according to claim 1 or 2, wherein the spring is designed as a compression spring (13) and is arranged in such a way that the second linear motor (8) for adjusting the support wheel (10, 11) is relieved by a compressive force generated by the compression spring (13), which counteracts a tensile force acting on the second linear motor (8).

4. Vehicle according to any one of the preceding claims, wherein two springs or compression springs (13) arranged in parallel are present.

5. Vehicle according to any one of the preceding claims, wherein the spring is designed as a gas pressure spring.

6. Vehicle according to any one of the preceding claims, which is designed to be operated in a self-balancing manner in the first operating mode.

7. Vehicle according to any one of the preceding claims, which is configured as a wheelchair (1) with a support configured as a seat (6).

## Revendications

1. Véhicule (1) apte à franchir un escalier (14) ou une rampe, en ce que le véhicule comporte des roues (3, 4), un train de roulement à chenilles (5), un espace de réception (6) destiné à porter et transporter une charge et une roue d'appui (10, 11) et en ce qu'il peut fonctionner sélectivement selon l'un des modes de fonctionnement suivants :
un premier mode de fonctionnement prévu pour un sol essentiellement plat, selon lequel une ou plusieurs roues (3, 4) sont entraînées,
un deuxième mode de fonctionnement prévu pour franchir un escalier (14) ou une rampe, selon lequel le train de roulement à chenilles (5) est entraîné,
un troisième mode de fonctionnement selon lequel la hauteur de l'espace de réception (6) destiné à porter et transporter une charge est réglable et le véhicule (1) est soutenu sur le train de roulement à chenilles (5) et la roue d'appui (10,11),
en ce que le véhicule (1) comporte :
- au moins un premier moteur linéaire (7) pour déplacer le train de roulement à chenilles (5),
- un deuxième moteur linéaire (8) pour déplacer la roue d'appui (10, 11),
- un mécanisme de levage, avec un corps de base (2) sur lequel le premier moteur linéaire (7) et le deuxième moteur linéaire (8) sont disposés, **caractérisé en ce qu'**un ressort (13) est disposé sur le mécanisme de levage pour éviter de solliciter le premier moteur linéaire (7) et/ou le deuxième moteur linéaire (8).

2. Véhicule selon la revendication 1, en ce que le ressort est disposé de telle sorte que la sollicitation du premier moteur linéaire (7) destiné au déplacement du train de roulement à chenilles (5) est évitée sous l'effet d'une force de traction générée par le ressort qui s'oppose à une force de pression agissant sur le premier moteur linéaire (7).

3. Véhicule selon la revendication 1 ou 2, en ce que le ressort est conçu comme un ressort de pression (13) et disposé de telle sorte que la sollicitation du deuxième moteur linéaire (8) destiné au déplacement de la roue d'appui (10, 11) est évitée sous l'effet d'une force de pression générée par le ressort de pression (13) qui s'oppose à une force de traction agissant sur le deuxième moteur linéaire (8).

4. Véhicule selon l'une des revendications précédentes, en ce que deux ressorts ou ressorts de pression (13) disposés parallèlement sont prévus.

5. Véhicule selon l'une des revendications précédentes, en ce que le ressort est conçu comme ressort à gaz.

6. Véhicule selon l'une des revendications précédentes, qui est conçu pour fonctionner de manière auto-équilibrée dans le premier mode de fonctionnement.

7. Véhicule selon l'une des revendications précédentes, qui est conçu comme fauteuil roulant (1) avec un espace de réception faisant fonction de siège (6).
